# EUROPEAN PATENT APPLICATION

(11) **EP 4 596 599 A1**
(43) Date of publication of application: **06.08.2025**
(21) Application number: 23872566.7
(22) Date of filing: 28.09.2023
(51) Int. Cl.: C08G 18/72, C08G 18/38, C08G 18/61, C08G 18/73, G02B 1/04

(54) **POLYMERIZABLE COMPOSITION FOR OPTICAL MATERIAL, METHOD FOR PRODUCING SAME, AND OPTICAL MATERIAL**

(30) Priority: 30.09.2022 JP 2022158847
(71) Applicant: Mitsui Chemicals, Inc., Tokyo 104-0028 (JP)
(72) Inventor: RYU, Akinori, Omuta-shi, Fukuoka 836-8610 (JP)
(74) Representative: Mewburn Ellis LLP
(86) International application number: PCT/JP2023/035536
(87) International publication number: WO 2024/071346

(57) **Abstract**

A polymerizable composition for an optical material, including: a polyisocyanate (a) including an aliphatic polyisocyanate (a1) and a modified form (a2) of an aliphatic polyisocyanate; a polythiol composition (b) including a polythiol compound; and a compound (c) represented by Formula (1). Each of R₁ to R₈ independently represents a group represented by Formula (2), an alkyl group having from 1 to 20 carbon atoms, an alkoxy group having from 1 to 20 carbon atoms, a hydroxy group, or a polysiloxy group, provided that at least one of R₁ to R₈ is a group represented by Formula (2). Each of m and n independently represents an integer of 0 or more. R₂₅ represents an alkylene group having from 1 to 20 carbon atoms or the like, k represents an integer of 1 or more, and * represents a binding position.

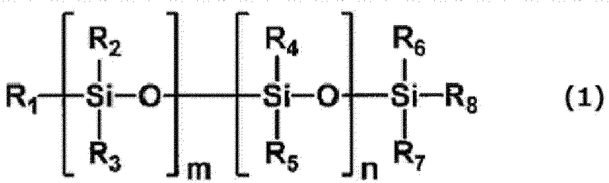

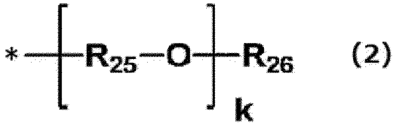

## Description

### TECHNICAL FIELD

The present disclosure relates to a polymerizable composition for an optical material and a method of producing the polymerizable composition, as well as an optical material.

### BACKGROUND ART

Optical materials made of glass have been conventionally used as optical materials (for example, lenses).

In recent years, optical materials made of resins have also been increasingly used from the viewpoints of lightweight properties and moldability.

For example, Patent Document 1 discloses a polymerizable composition for an optical material, the composition including polyisocyanate and polythiol, as a polymerizable composition for an optical material, for production of an optical material made of a resin. Patent Document 1 specifically discloses a polymerizable composition for an optical material, the composition including a polyisocyanate (a) including an aliphatic polyisocyanate (a1) and a modified form (a2) of an aliphatic polyisocyanate, and polythiol (b) having a di- or higher functional thiol group. Patent Document 1 describes that an optical material excellent in physical properties, such as transparency, refractiveness, heat resistance, and strength, can be obtained from the polymerizable composition for an optical material described in Patent Document 1.

Patent Document 1: WO 2015/119220

### SUMMARY OF INVENTION

### Technical Problem

However, a resin for an optical material, obtained from a polymerizable composition for an optical material, the composition including a polyisocyanate (a) including an aliphatic polyisocyanate (a1) and a modified form (a2) of an aliphatic polyisocyanate, and a polythiol composition (b) including a polythiol compound, may be demanded to be with striae more reduced.

An object of one aspect of the disclosure is to provide a polymerizable composition for an optical material, the polymerizable composition enabling a resin with striae reduced to be produced, and an optical material including a resin with striae reduced.

### Solution to Problem

Solutions to solve the above problems include the following aspects.
<1> A polymerizable composition for an optical material, the composition comprising:
   a polyisocyanate (a) comprising an aliphatic polyisocyanate (a1) and a modified form (a2) of an aliphatic polyisocyanate;
   a polythiol composition (b) comprising a polythiol compound; and
   a polyether-modified silicone compound (c) represented by the following Formula (1): 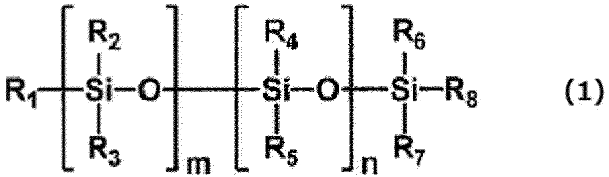 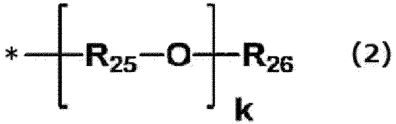
   wherein, in Formula (1), each of R₁ to R₈ independently represents a polyether group represented by Formula (2), an alkyl group having from 1 to 20 carbon atoms, an alkoxy group having from 1 to 20 carbon atoms, a hydroxy group, or a polysiloxy group, provided that at least one of R₁ to R₈ is a polyether group represented by Formula (2),
   in Formula (1), each of m and n independently represents an integer of 0 or more,
   in Formula (1), in a case in which a plurality of R₂'s, R₃'s, R₄'s, or R₅'s are present, the plurality of R₂'s, R₃'s, R₄'s, or R₅'s may be the same as or different from each other,
   in Formula (2), R₂₅ represents an alkylene group having from 1 to 20 carbon atoms, R₂₆ represents a hydrogen atom, an alkyl group having from 1 to 20 carbon atoms, an alkenyl group having from 2 to 20 carbon atoms, or an alkynyl group having from 2 to 20 carbon atoms, k represents an integer of 1 or more, and * represents a binding position, and
   in Formula (2), in a case in which a plurality of R₂₅'s are present, the plurality of R₂₅'s may be the same as or different from each other.
<2> The polymerizable composition for an optical material according to <1>, wherein the modified form (a2) comprises a mononuclear isocyanurate of an aliphatic polyisocyanate.
<3> The polymerizable composition for an optical material according to <1> or <2>, wherein at least one of the aliphatic polyisocyanate (a1) or the aliphatic polyisocyanate in the modified form (a2) comprises at least one selected from the group consisting of pentamethylene diisocyanate, hexamethylene diisocyanate, heptamethylene diisocyanate, lysine diisocyanate, lysine triisocyanate, dimer acid diisocyanate, octamethylene diisocyanate, and decamethylene diisocyanate.
<4> The polymerizable composition for an optical material according to any one of <1> to <3>, wherein at least one of the aliphatic polyisocyanate (a1) or the aliphatic polyisocyanate in the modified form (a2) comprises an aliphatic polyisocyanate obtained from a plant-derived raw material.
<5> The polymerizable composition for an optical material according to any one of <1> to <4>, wherein the polythiol compound is at least one selected from the group consisting of:
   4-mercaptomethyl-1,8-dimercapto-3,6-dithiaoctane,
   4,8-dimercaptomethyl-1,11-dimercapto-3,6,9-trithiaundecane,
   4,7-dimercaptomethyl-1,11-dimercapto-3,6,9-trithiaundecane,
   5,7-dimercaptomethyl-1,11-dimercapto-3,6,9-trithiaundecane,
   pentaerythritol tetrakis(2-mercaptoacetate),
   pentaerythritol tetrakis(3-mercaptopropionate),
   2,5-dimercaptomethyl-1,4-dithiane,
   bis(2-mercaptoethyl)sulfide, and
   diethylene glycol bis(3-mercaptopropionate).
<6> The polymerizable composition for an optical material according to any one of <1> to <5>, wherein the polythiol compound comprises a polythiol compound obtained from a plant-derived raw material.
<7> The polymerizable composition for an optical material according to any one of <1> to <6>, wherein a proportion of the modified form (a2) in the polyisocyanate (a) is 60% by mass or less.
<8> The polymerizable composition for an optical material according to any one of <1> to <7>, wherein a total content of the polyisocyanate (a) and the polythiol composition (b) is 80% by mass or more based on an entire amount of the polymerizable composition for an optical material.
<9> The polymerizable composition for an optical material according to any one of <1> to <8>, wherein a content of the polyether-modified silicone compound (c) is from 0.001% by mass to 5% by mass based on an entire amount of the polymerizable composition for an optical material.
<10> The polymerizable composition for an optical material according to any one of <1> to <8>, further comprising an ultraviolet absorber, a polymerization catalyst, and an acidic phosphate serving as an internal release agent.
<11> The polymerizable composition for an optical material according to <10>, wherein:
   a content of the ultraviolet absorber is from 0.1% by mass to 5% by mass based on an entire amount of the polymerizable composition for an optical material,
   a content of the polymerization catalyst is from 0.001% by mass to 5% by mass based on the entire amount of the polymerizable composition for an optical material, and
   a content of the acidic phosphate serving as an internal release agent is from 0.001% by mass to 5% by mass based on the entire amount of the polymerizable composition for an optical material.
<12> An optical material, comprising a resin that is a cured product of the polymerizable composition for an optical material according to any one of <1> to <11>.
<13> The optical material according to <12>, wherein the resin has a degree of biomass of 25% or more.
<14> A method of producing the polymerizable composition for an optical material according to <10> or <11>, the method comprising:
   a step of adding the polyether-modified silicone compound (c) and the acidic phosphate to the aliphatic polyisocyanate (a1), to obtain a solution A1;
   a step of dissolving the ultraviolet absorber and the polymerization catalyst in the aliphatic polyisocyanate (a1), to obtain a solution A2;
   a step of mixing the solution A1, the solution A2, and the modified form (a2), to obtain a solution A3; and
   a step of adding the polythiol composition (b) to the solution A3, to obtain the polymerizable composition for an optical material.

### Advantageous Effects of Invention

According to one aspect of the disclosure, a polymerizable composition for an optical material, the polymerizable composition enabling a resin with striae reduced to be produced, and an optical material including a resin with striae reduced are provided.

### DESCRIPTION OF EMBODIMENTS

A numerical value range represented by "(from) ... to ... " in the disclosure means a range including numerical values described before and after "to" as the lower limit and the upper limit, respectively.

In a case in which a plurality of substances corresponding to each component are present in a composition, the amount of such each component in the composition herein means the total amount of the plurality of substances present in the composition, unless particularly noted.

The upper limit value or the lower limit value described with respect to a certain numerical value range in a numerical value range described stepwise in the disclosure may be replaced with the upper limit value or the lower limit value of another numerical value range described stepwise. The upper limit value or the lower limit value of a certain numerical value range in a numerical value range described in the disclosure may be replaced with any value represented in the Examples.

### [Polymerizable Composition]

The polymerizable composition for an optical material of the disclosure (hereinafter, also simply referred to as "polymerizable composition") includes:
a polyisocyanate (a) including an aliphatic polyisocyanate (a1) and a modified form (a2) of an aliphatic polyisocyanate,
a polythiol composition (b) including a di- or higher functional polythiol compound, and
a polyether-modified silicone compound (c) represented by the following Formula (1).

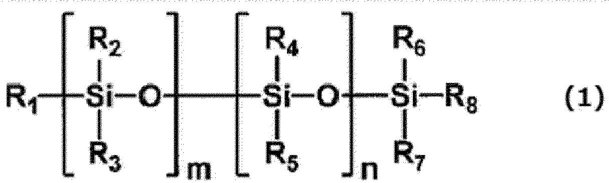

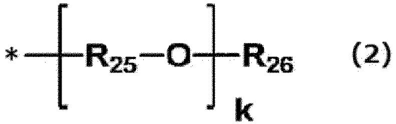

In Formula (1), each of R₁ to R₈ independently represents a polyether group represented by Formula (2), an alkyl group having from 1 to 20 carbon atoms, an alkoxy group having from 1 to 20 carbon atoms, a hydroxy group, or a polysiloxy group, provided that at least one of R₁ to R₈ is a polyether group represented by Formula (2).

**In** Formula (1), each of m and n independently represents an integer of 0 or more.

**In** Formula (1), in a case in which a plurality of R₂'s, R₃'s, R₄'s, or R₅'s are present, the plurality of R₂'s, R₃'s, R₄'s, or R₅'s may be the same as or different from each other.

**In** Formula (2), R₂₅ represents an alkylene group having from 1 to 20 carbon atoms, R₂₆ represents a hydrogen atom, an alkyl group having from 1 to 20 carbon atoms, an alkenyl group having from 2 to 20 carbon atoms, or an alkynyl group having from 2 to 20 carbon atoms, k represents an integer of 1 or more, and * represents a binding position.

**In** Formula (2), in a case in which a plurality of R₂₅'s are present, the plurality of R₂₅'s may be the same as or different from each other.

As described above, a resin obtained from a polymerizable composition for an optical material, the composition including a polyisocyanate (a) including an aliphatic polyisocyanate (a1) and a modified form (a2) of an aliphatic polyisocyanate, and a polythiol composition (b) including a di- or higher functional polythiol compound, may be demanded to be with striae more reduced.

According to the polymerizable composition of the disclosure, a resin with suppressed striae can be obtained.

It is considered that such an effect is provided by the polyether-modified silicone compound (c).

Hereinafter, each component that can be contained in the polymerizable composition of the disclosure is described.

### <Polyisocyanate (a)>

The polymerizable composition of the disclosure contains a polyisocyanate (a).

The polyisocyanate (a) includes an aliphatic polyisocyanate (a1) and a modified form (a2) of an aliphatic polyisocyanate.

The polyisocyanate (a) preferably includes an aliphatic polyisocyanate (a1) and a modified form (a2) of an aliphatic polyisocyanate, as a main component.

**In** the disclosure, the "main component" means a component whose content is 50% by mass or more.

In the disclosure, the content of the "main component" is preferably 60% by mass or more, more preferably 70% by mass or more, still more preferably 80% by mass or more.

In other words, the proportion of the aliphatic polyisocyanate (a1) and the modified form (a2) in the polyisocyanate (a) is preferably 50% by mass or more, more preferably 60% by mass or more, still more preferably 70% by mass or more, and still more preferably 80% by mass or more.

The proportion of the aliphatic polyisocyanate (a1) and the modified form (a2) in the polyisocyanate (a) may be 100% by mass, or may be less than 100% by mass.

### (Aliphatic Polyisocyanate (a1))

Examples of the aliphatic polyisocyanate (a1) include trimethylene diisocyanate, tetramethylene diisocyanate, pentamethylene diisocyanate, hexamethylene diisocyanate, heptamethylene diisocyanate, trimethylhexamethylene diisocyanate, lysine diisocyanate methyl ester, lysine diisocyanate, lysine triisocyanate, xylylene diisocyanate, tetramethylxylylene diisocyanate, bis(isocyanate methyl)naphthaline, mesitylene triisocyanate, bis(isocyanate methyl)sulfide, bis(isocyanate ethyl)sulfide, bis(isocyanate methyl)disulfide, bis(isocyanate ethyl)disulfide, bis(isocyanate methylthio)methane, bis(isocyanate ethylthio)methane, bis(isocyanate ethylthio)ethane, bis(isocyanate methylthio)ethane, dimer acid diisocyanate, octamethylene diisocyanate, and decamethylene diisocyanate.

The aliphatic polyisocyanate (a1) is
preferably an acyclic aliphatic polyisocyanate such as pentamethylene diisocyanate, hexamethylene diisocyanate, heptamethylene diisocyanate, lysine diisocyanate, lysine triisocyanate, dimer acid diisocyanate, octamethylene diisocyanate, or decamethylene diisocyanate, and
more preferably a chain aliphatic polyisocyanate such as pentamethylene diisocyanate, hexamethylene diisocyanate, heptamethylene diisocyanate, lysine diisocyanate, lysine triisocyanate, octamethylene diisocyanate, or decamethylene diisocyanate.

Such an aliphatic polyisocyanate (a1) can be used singly, or in combination of two or more kinds thereof.

The aliphatic polyisocyanate (a1) preferably includes at least one selected from the group consisting of pentamethylene diisocyanate, hexamethylene diisocyanate, heptamethylene diisocyanate, lysine diisocyanate, lysine triisocyanate, dimer acid diisocyanate, octamethylene diisocyanate, and decamethylene diisocyanate.

The proportion of the aliphatic polyisocyanate (a1) in the polyisocyanate (a) is preferably 10% by mass or more, more preferably 20% by mass or more, still more preferably 30% by mass or more, still more preferably 40% by mass or more, still more preferably 45% by mass or more, and still more preferably 50% by mass or more, from the viewpoint that the function of the resulting resin as an optical material is retained (for example, from the viewpoint of suppression of air bubbles and strain).

### (Modified Form (a2) of Aliphatic Polyisocyanate)

Examples of the aliphatic polyisocyanate (namely, aliphatic polyisocyanate before modification for formation of the modified form (a2), the same applies to the following.) in the modified form (a2) of an aliphatic polyisocyanate include the same compounds as those with respect to the aliphatic polyisocyanate (a1).

The aliphatic polyisocyanate (a1) and the aliphatic polyisocyanate in the modified form (a2) may be the same or different, and are preferably the same.

Examples of the modified form (a2) of an aliphatic polyisocyanate (hereinafter, also simply referred to as "modified form (a2)") include a multimer of the aliphatic polyisocyanate, a biuret-modified form of the aliphatic polyisocyanate, an allophanate-modified form of the aliphatic polyisocyanate, an oxadiazinetrione-modified form of the aliphatic polyisocyanate, and a polyol-modified form of the aliphatic polyisocyanate.

Examples of the multimer of the aliphatic polyisocyanate include a dimer such as uretdione, uretimine, or carbodiimide, and a trimer or a higher multimer such as isocyanurate or iminooxadiandione.

The isocyanurate of the aliphatic polyisocyanate can be obtained by reacting the aliphatic polyisocyanate in the presence of a known isocyanuratization catalyst.

The biuret-modified form of the aliphatic polyisocyanate can be obtained by reacting the aliphatic polyisocyanate and, for example, water, a tertiary alcohol (for example, t-butyl alcohol), or a secondary amine (for example, dimethylamine or diethylamine), and then further reacting them in the presence of a known biuretization catalyst.

The allophanate-modified form of the aliphatic polyisocyanate can be obtained by reacting the aliphatic polyisocyanate and a monoalcohol (monohydric alcohol, for example, alcohol having from 1 to 10 carbon atoms), and then further reacting them in the presence of a known allophanatization catalyst. The oxadiazinetrione-modified form of the aliphatic polyisocyanate can be obtained by a reaction of the aliphatic polyisocyanate and carbon dioxide.

The iminooxadiandione-modified form of the aliphatic polyisocyanate can be obtained by further reacting the aliphatic polyisocyanate in the presence of a known iminooxadiandione formation catalyst.

The polyol-modified form of the aliphatic polyisocyanate can be obtained by a reaction of the aliphatic polyisocyanate and an alcohol.

Examples of the alcohol for providing the modified form of an aliphatic polyisocyanate include a tertiary alcohol, a monoalcohol and a polyhydric alcohol, preferably a trihydric alcohol such as glycerin or trimethylolpropane.

The alcohol for providing the modified form of an aliphatic polyisocyanate is preferably a plant-derived alcohol from the viewpoint of utilization of non-fossil resources.

The modified form (a2) of an aliphatic polyisocyanate can be used singly, or in combination of two or more kinds thereof.

The modified form (a2) preferably includes the multimer of the aliphatic polyisocyanate, and more preferably includes a mononuclear isocyanurate of the aliphatic polyisocyanate (namely, isocyanurate being a trimer of the aliphatic polyisocyanate).

The proportion of the modified form (a2) in the polyisocyanate (a) is preferably 60% by mass or less from the viewpoint that the function of the resulting resin as an optical material is enhanced (for example, from the viewpoint of suppression of air bubbles and strain).

The modified form (a2) contributes to physical properties (for example, transparency, refractive index, heat resistance, and strength) of the resulting resin. The proportion of the modified form (a2) in the polyisocyanate (a) is preferably 1% by mass or more from the viewpoint of more enhancements in physical properties of the resulting resin.

The proportion of the modified form (a2) in the polyisocyanate (a) is more preferably from 1% by mass to 60% by mass, still more preferably from 5% by mass to 55% by mass, still more preferably from 10% by mass to 50% by mass, and still more preferably from 30% by mass to 50% by mass.

The polyisocyanate (a) used here may be a reaction liquid obtained in preparation of the modified form (a2) of an aliphatic polyisocyanate.

**In** this case, the reaction liquid includes the aliphatic polyisocyanate (a1), and the modified form (a2) being a modified form of the aliphatic polyisocyanate (a1).

The polyisocyanate (a) can also be obtained by mixing the prepared modified form (a2) and the aliphatic polyisocyanate (a1) which is the same as or different from the aliphatic polyisocyanate used in preparation of the modified form (a2).

At least one of the aliphatic polyisocyanate (a1) or the aliphatic polyisocyanate in the modified form (a2) preferably includes at least one selected from the group consisting of pentamethylene diisocyanate, hexamethylene diisocyanate, heptamethylene diisocyanate, lysine diisocyanate, lysine triisocyanate, dimer acid diisocyanate, octamethylene diisocyanate, and decamethylene diisocyanate, from the viewpoint of more effective exertion of the effects due to the polymerizable composition of the disclosure.

At least one of the aliphatic polyisocyanate (a1) or the aliphatic polyisocyanate in the modified form (a2) in the polymerizable composition of the disclosure preferably includes an aliphatic polyisocyanate obtained from a plant-derived raw material from the viewpoint of utilization of non-fossil resources.

Examples of the plant-derived aliphatic polyisocyanate include pentamethylene diisocyanate, hexamethylene diisocyanate, heptamethylene diisocyanate, lysine diisocyanate, lysine triisocyanate, dimer acid diisocyanate, octamethylene diisocyanate, and decamethylene diisocyanate, and these can be used singly, or in combination of two or more kinds thereof. The plant-derived aliphatic polyisocyanate is preferably pentamethylene diisocyanate, and particularly preferably 1,5-pentamethylene diisocyanate.

The plant-derived aliphatic polyisocyanate is obtained by, for example, subjecting a plant-derived divalent carboxylic acid to acid amidation and reduction to perform conversion into a terminal amino group, and furthermore converting the terminal amino group into an isocyanate group by a reaction with phosgene.

The plant-derived polyisocyanate can also be obtained by adopting amino acid being a plant-derived raw material, as a raw material, and converting an amino group in the amino acid being a plant-derived raw material, into an isocyanate group.

For example, the plant-derived pentamethylene diisocyanate is obtained by subjecting lysine to decarboxylation of a carboxyl group and then conversion of an amino group into an isocyanate group. The pentamethylene diisocyanate is particularly preferably 1,5-pentamethylene diisocyanate.

A polymerizable composition according to a mode in which at least one of the aliphatic polyisocyanate (a1) or the aliphatic polyisocyanate in the modified form (a2) includes an aliphatic polyisocyanate obtained from a plant-derived raw material is cured to easily obtain a resin described below in which the degree of biomass is 25% or more.

Examples of the aliphatic polyisocyanate obtained from a plant-derived raw material include pentamethylene diisocyanate obtained by phosgenation of pentamethylenediamine or its salt thereof obtained by a biochemical method, as described in WO 2012/121291.

In the polymerizable composition of the disclosure, at least one selected from the group consisting of an alicyclic polyisocyanate, an aromatic polyisocyanate, and a heterocyclic polyisocyanate can also be used in combination with the polyisocyanate (a).

Such alicyclic polyisocyanate, aromatic polyisocyanate, and heterocyclic polyisocyanate can be found in the description of WO 2015/119220.

### <Polythiol Composition (b)>

The polymerizable composition of the disclosure contains a polythiol composition (b) including a polythiol compound.

The polythiol composition (b) preferably includes a polythiol compound as a main component.

### (Polythiol Compound)

The polythiol compound in the polythiol composition (b) may be any compound having two or more thiol groups.

The polythiol compound in the polythiol composition (b) can be found in the description of WO 2015/119220.

The polythiol composition (b) includes at least one (hereinafter, also referred to as "polythiol component S") selected from the group consisting of:
4-mercaptomethyl-1,8-dimercapto-3,6-dithiaoctane,
4,8-dimercaptomethyl-1,11-dimercapto-3,6,9-trithiaundecane,
4,7-dimercaptomethyl-1,11-dimercapto-3,6,9-trithiaundecane,
5,7-dimercaptomethyl-1,11-dimercapto-3,6,9-trithiaundecane,
pentaerythritol tetrakis(2-mercaptoacetate),
pentaerythritol tetrakis(3-mercaptopropionate),
2,5-dimercaptomethyl-1,4-dithiane,
bis(2-mercaptoethyl)sulfide, and
diethylene glycol bis(3-mercaptopropionate).

The polythiol composition (b) more preferably includes the polythiol component S as a main component.

**In** this case, the polythiol composition (b) may contain at least one component other than the polythiol component S (for example, any other polythiol compound, or any other component than the polythiol compound).

Examples of a more specific mode of the polythiol composition (b) include:
a mode in which pentaerythritol tetrakis(3-mercaptopropionate) (hereinafter, also referred to as "polythiol component S1") is included as a main component;
a mode in which 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane (hereinafter, these three compounds are also collectively referred to as "polythiol component S2") are included as a main component;
a mode in which 4-mercaptomethyl-1,8-dimercapto-3,6-dithiaoctane (hereinafter, also referred to as "polythiol component S3") is included as a main component;
a mode in which polythiol component S1 and polythiol component S2 are included as a main component; and
a mode in which polythiol component S2 and polythiol component S3 are included as a main component.

Such a polythiol composition (b) according to each of the modes may contain at least one component other than the main component (for example, any other polythiol compound, or any other component than the polythiol compound).

The polythiol compound in the polythiol composition (b) preferably includes a polythiol compound obtained from a plant-derived raw material.

Examples of the polythiol compound obtained from a plant-derived raw material include a polythiol compound (for example, the above polythiol component S) synthesized with, as a raw material, epichlorohydrin produced through chlorination and epoxidation from glycerin obtained from a plant-derived raw material.

Examples of the glycerin obtained from a plant-derived raw material include glycerin obtained by hydrolysis and/or transesterification of a glycerin fatty acid ester contained in vegetable fat or oil, such as rapeseed oil, palm oil, castor oil, or olive oil.

The polythiol compound in the polythiol composition (b) easily provides a resin described below in which the degree of biomass is 25% or more, by curing of a polymerizable composition according to a mode in which the polythiol compound obtained from a plant-derived raw material is included.

It is noted that a resin in which the degree of biomass is 25% or more can be produced even without a polymerizable composition according to a mode in which the polythiol compound obtained from a plant-derived raw material is included.

The total content of the polyisocyanate (a) and the polythiol composition (b) in the polymerizable composition of the disclosure is not particularly limited, and the total content of the polyisocyanate (a) and the polythiol composition (b) is preferably 80% by mass or more based on the entire amount of the polymerizable composition of the disclosure.

The molar ratio of the entire thiol group in the polythiol composition (b) to the entire isocyanate group in the polyisocyanate (a) in the polymerizable composition of the disclosure is preferably from 0.8 to 1.2, more preferably from 0.85 to 1.15, and still more preferably from 0.9 to 1. 1.

### <Polyether-Modified Silicone Compound (c)>

The polymerizable composition of the disclosure contains a polyether-modified silicone compound (c) represented by the following Formula (1) (hereinafter, also referred to as "compound represented by Formula (1)").

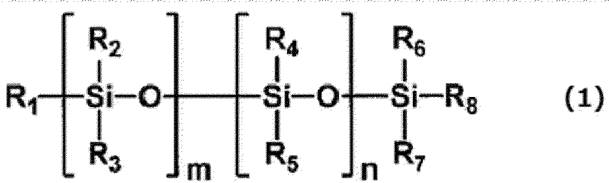

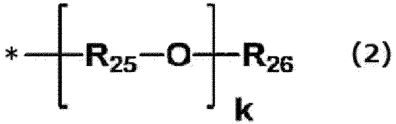

**In** Formula (1), each of R₁ to R₈ independently represents a polyether group represented by Formula (2), an alkyl group having from 1 to 20 carbon atoms, an alkoxy group having from 1 to 20 carbon atoms, a hydroxy group, or a polysiloxy group, provided that at least one of R₁ to R₈ is a polyether group represented by Formula (2).

**In** Formula (1), each of m and n independently represents an integer of 0 or more.

**In** Formula (1), in a case in which a plurality of R₂'s, R₃'s, R₄'s, or R₅'s are present, the plurality of R₂'s, R₃'s, R₄'s, or R₅'s may be the same as or different from each other.

**In** Formula (2), R₂₅ represents an alkylene group having from 1 to 20 carbon atoms, R₂₆ represents a hydrogen atom, an alkyl group having from 1 to 20 carbon atoms, an alkenyl group having from 2 to 20 carbon atoms, or an alkynyl group having from 2 to 20 carbon atoms, k represents an integer of 1 or more, and * represents a binding position.

**In** Formula (2), in a case in which a plurality of R₂₅'s are present, the plurality of R₂₅'s may be the same as or different from each other.

**In** Formula (2), the alkylene group having from 1 to 20 carbon atoms, represented by R₂₅, is preferably a chain alkylene group (namely, linear or branched alkylene group) having from 1 to 20 carbon atoms.

Examples of the alkylene group having from 1 to 20 carbon atoms, represented by R₂₅, include a methylene group, an ethylene group, a n-propylene group, an isopropylene group, a n-butylene group, an isobutylene group, a t-butylene group, a n-pentylene group, an isopentylene group, a t-pentylene group, a n-hexylene group, a n-heptylene group, an isoheptylene group, a n-octylene group, an isooctylene group, a n-nonylene group, an isononylene group, a n-decylene group, an isodecylene group, a n-undecylene group, an isoundecylene group, a n-dodecylene group, an isododecylene group, a cyclopentylene group, a cyclohexylene group, a cycloheptylene group, a cyclooctylene group, a cyclononylene group, a methylcyclopentylene group, and a methylcyclohexylene group.

The alkylene group having from 1 to 20 carbon atoms, represented by R₂₅, is still more preferably a linear or branched alkylene group having from 1 to 8 carbon atoms.

In Formula (1) and Formula (2), the alkyl group having from 1 to 20 carbon atoms represented by R₁ to R₈ or R₂₆ is preferably a chain alkyl group (namely, linear or branched alkyl group) having from 1 to 20 carbon atoms.

Examples of the alkyl group having from 1 to 20 carbon atoms represented by R₁ to R₈ or R₂₆ include a methyl group, an ethyl group, a n-propyl group, an isopropyl group, a n-butyl group, an isobutyl group, a t-butyl group, a n-pentyl group, an isopentyl group, a t-pentyl group, a n-hexyl group, a n-heptyl group, an isoheptyl group, a n-octyl group, an isooctyl group, a n-nonyl group, an isononyl group, a n-decyl group, an isodecyl group, a n-undecyl group, an isoundecyl group, a n-dodecyl group, an isododecyl group, a cyclopentyl group, a cyclohexyl group, a cycloheptyl group, a cyclooctyl group, a cyclononyl group, a methylcyclopentyl group, and a methylcyclohexyl group.

The alkyl group having from 1 to 20 carbon atoms represented by R₁ to R₈ or R₂₆ is still more preferably a linear or branched alkyl group having from 1 to 8 carbon atoms.

In Formula (1) and Formula (2), the alkoxy group having from 1 to 20 carbon atoms represented by R₁ to R₈ or R₂₆ is preferably a chain alkoxy group (namely, linear or branched alkoxy group) having from 1 to 20 carbon atoms.

Examples of the alkoxy group having from 1 to 20 carbon atoms represented by R₁ to R₈ or R₂₆ include a methoxy group, an ethoxy group, a n-propyloxy group, an isopropyloxy group, a n-butyloxy group, an isobutyloxy group, a t-butyloxy group, a n-pentyloxy group, an isopentyloxy group, a t-pentyloxy group, a n-hexyloxy group, a n-heptyloxy group, an isoheptyloxy group, a n-octyloxy group, an isooctyloxy group, a n-nonyloxy group, an isononyloxy group, a n-decyloxy group, an isodecyloxy group, a n-undecyloxy group, an isoundecyloxy group, a n-dodecyloxy group, an isododecyloxy group, a cyclopentyloxy group, a cyclohexyloxy group, a cycloheptyloxy group, a cyclooctyloxy group, a cyclononyloxy group, a methylcyclopentyloxy group, and a methylcyclohexyloxy group.

The alkoxy group having from 1 to 20 carbon atoms represented by R₁ to R₈ or R₂₆ is still more preferably a linear or branched alkoxy group having from 1 to 8 carbon atoms.

In Formula (2), the alkenyl group having from 2 to 20 carbon atoms represented by R₂₆ is preferably a chain alkenyl group (namely, linear or branched alkenyl group) having from 2 to 20 carbon atoms.

Examples of the alkenyl group having from 2 to 20 carbon atoms represented by R₂₆ include a vinyl group, a 1-propenyl group, a 2-propenyl group, a 1-butenyl group, a 2-butenyl group, a 3-butenyl group, a 1-pentenyl group, a 2-pentenyl group, a 3-pentenyl group, a 4-pentenyl group, a 1-hexenyl group, a 2-hexenyl group, a 3-hexenyl group, a 4-hexenyl group, 5-hexenyl group, 6-heptenyl group, a 7-octenyl group, an 8-nonenyl group, a 9-decenyl group, a 2-methyl-1-propenyl group, a 2-methyl-2-propenyl group, a 3-methyl-3-butenyl group, a 4-methyl-4-pentenyl group, and a 2-cyclohexyl-2-propenyl group.

The alkenyl group having from 2 to 20 carbon atoms represented by R₂₆ is still more preferably a linear or branched alkenyl group having from 2 to 8 carbon atoms.

In Formula (2), the alkynyl group having from 2 to 20 carbon atoms represented by R₂₆ is preferably a chain alkynyl group (namely, linear or branched alkynyl group) having from 2 to 20 carbon atoms.

Examples of the alkynyl group having from 2 to 20 carbon atoms represented by R₂₆ include an ethynyl group, a 1-propynyl group, a 2-propynyl group, a 1-butynyl group, a 2-butynyl group, a 3-butynyl group, a 2-methyl-2-propynyl group, a 3-methyl-1-butynyl group, a 4-pentynyl group, 5-hexynyl group, 6-heptynyl group, a 7-octynyl group, an 8-nonynyl group, and a 9-decynyl group.

The alkynyl group having from 2 to 20 carbon atoms represented by R₂₆ is still more preferably a linear or branched alkynyl group having from 2 to 8 carbon atoms.

Examples of the compound represented by Formula (1) include:
POLYFLOW KL-100, POLYFLOW KL-600, and Granol 410 (manufactured by Kyoeisha Chemical Co., Ltd., trade names);
BYK-302, BYK-307, BYK-322, BYK-323, BYK-331, BYK-333, BYK-347, BYK-348, and BYK-349 (manufactured by BYK-Chemie, trade names);
KF-351, KF-352, KF-353, KF-354L, KF-355, KF-355A, KF-615A, and KF-618 (manufactured by Shin-Etsu Chemical Co., Ltd., trade names);
SH3746, SH3771, SH8400, and SF8410 (manufactured by Dow Corning Toray Co., Ltd., trade names); and
TSF4440, TSF4445, TSF4446, and TSF4452 (manufactured by Toshiba Silicone Co., Ltd., trade names).

Particularly preferred examples include POLYFLOW KL-100 and POLYFLOW KL-600 (manufactured by Kyoeisha Chemical Co., Ltd., trade names).

The compound represented by Formula (1) is one or more selected from preferably POLYFLOW KL-100 or POLYFLOW KL-600 (manufactured by Kyoeisha Chemical Co., Ltd., trade name), more preferably POLYFLOW KL-100, from the viewpoint of not only an increase in pot life of the polymerizable composition, but also an enhancement in balance between the effect of suppressing striae in the resulting molded product and the effect of enhancing transparency of the resulting molded product.

POLYFLOW KL-100 includes a compound represented by Formula (1A) described below and a compound represented by Formula (1B) described below.

The compound represented by Formula (1)
preferably includes at least one selected from the group consisting of a compound in which R₂₆ in the polyether group represented by Formula (2) is a hydrogen atom and a compound in which R₂₆ in the polyether group represented by Formula (2) is a linear or branched alkenyl group having from 2 to 20 carbon atoms,
more preferably includes at least one selected from the group consisting of a compound in which R₂₆ in the polyether group represented by Formula (2) is a hydrogen atom and a compound in which R₂₆ in the polyether group represented by Formula (2) is a linear or branched alkenyl group having from 2 to 8 carbon atoms, and
still more preferably includes at least one selected from the group consisting of a compound represented by the following Formula (1A) and a compound represented by the following Formula (1B)
from the viewpoint of not only an increase in pot life of the polymerizable composition, but also an enhancement in balance between the effect of suppressing striae in the resulting resin and the effect of enhancing transparency of the resin.

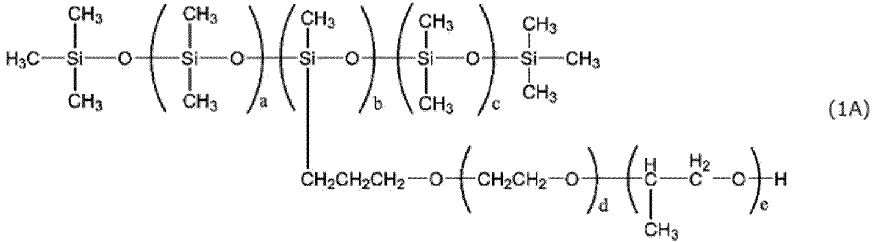

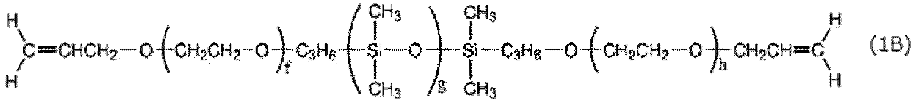

In Formula (1A), a + c is from 1 to 100, b is from 1 to 100, d is from 10 to 1000, and e is from 1 to 100.

In Formula (1B), f + h is from 1 to 100, and g is from 1 to 100.

In Formula (1A), a + c is preferably from 5 to 50 from the viewpoint of more suppression of striae in the resulting resin.

In Formula (1A), b is preferably from 5 to 50 from the same viewpoint.

In Formula (1A), e is preferably from 5 to 50 from the same viewpoint.

The molecular weight of the compound represented by Formula (1A) is preferably from 100 to 10000, more preferably from 1000 to 5000, from the same viewpoint.

**In** Formula (1B), f + h is preferably from 1 to 20 from the viewpoint of more suppression of striae in the resulting resin.

**In** Formula (1B), g is preferably from 1 to 10 from the same viewpoint.

The molecular weight of the compound represented by Formula (1B) is preferably from 100 to 10000, more preferably from 500 to 5000, from the same viewpoint.

**In a** case in which the polyether-modified silicone compound (c) includes both the compound represented by Formula (1A) and the compound represented by Formula (1B), the proportion of the mass of the compound represented by Formula (1A) to the total mass of the compound represented by Formula (1A) and the compound represented by Formula (1B) is preferably from 50% to 90%, more preferably from 60% to 80%, from the viewpoint of more suppression of striae in the resulting resin.

The content of the polyether-modified silicone compound (c) (namely, compound represented by Formula (1)) is preferably from 0.001% by mass to 5% by mass, more preferably from 0.005% by mass to 3% by mass, and still more preferably from 0.01% by mass to 2% by mass based on the entire amount of the polymerizable composition of the disclosure from the viewpoint of more suppression of striae in the resulting resin.

### <Polymerization Catalyst>

The polymerizable composition of the disclosure may contain at least one polymerization catalyst.

The polymerization catalyst functions as, for example, a catalyst of a polymerization reaction during the polymerizable composition of the disclosure being cured to provide a resin.

The polymerization catalyst used here can be a known polymerization catalyst such as an organometallic compound, an amine compound, or a quaternary onium salt.

Examples of the organometallic compound include a compound containing tin, zinc, copper, or the like.

Specific examples of the organometallic compound include:
an organic tin compound such as tin acetate, tin octylate, tin oleate, tin laurate, dibutyltin diacetate, dimethyltin dilaurate, dibutyltin dilaurate, dibutyltin dimercaptide, dibutyltin maleate, dibutyltin dineodecanoate, dioctyltin dimercaptide, dioctyltin dilaurate, dimethyltin dichloride, or dibutyltin dichloride;
an organozinc compound such as zinc naphthenate; and
an organocopper compound such as copper octenate.

Examples of the amine compound include:
a tertiary amine compound such as triethylamine, tri-n-propylamine, triisopropylamine, tri-n-butylamine, triisobutylamine, trioctylamine, triallylamine, N,N-dimethylbenzylamine, N-methylmorpholine, N,N-dimethylcyclohexylamine, dimethyldipropylenetriamine, pentamethyldiethylenetriamine, bis(2-dimethylaminoethyl)ether, N-methylmorpholine, N,N'-dimethylpiperazine, triethylenediamine, N,N,N',N'-tetramethylethylenediamine, bicyclooctanediamine (DABCO), 2-methylpyrazine, pyridine, α-picoline, β-picoline, γ-picoline, 2,6-lutidine, 3,5-lutidine, 2,4,6-trimethylpyridine, or 3-chloropyridine;
an imidazole compound such as imidazole, 1,2-dimethylimidazole, N-benzyl-2-methylimidazole, or 2-ethyl-4-imidazole; and
a pyrazole compound such as pyrazole or 3,5-dimethylpyrazole.

Examples of the quaternary onium salt include a quaternary ammonium salt compound and a phosphonium salt compound.

Examples of the quaternary ammonium salt compound include a quaternary ammonium salt compound such as tetrabutylammonium bromide or tetraethylammonium hydroxide.

Examples of the phosphonium salt compound include a phosphonium salt compound such as tetramethylphosphonium chloride, tetraethylphosphonium chloride, tetrapropylphosphonium chloride, tetrabutylphosphonium chloride, tetrahexylphosphonium chloride, tetraoctylphosphonium chloride, ethyltriphenylphosphonium chloride, tetraphenylphosphonium chloride, butyltriphenylphosphonium chloride, benzyltriphenylphosphonium chloride, methoxymethyltriphenylphosphonium chloride, tetramethylphosphonium bromide, tetraethylphosphonium bromide, tetrapropylphosphonium bromide, tetrabutylphosphonium bromide, tetrahexylphosphonium bromide, tetraoctylphosphonium bromide, ethyltriphenylphosphonium bromide, tetraphenylphosphonium bromide, butyltriphenylphosphonium bromide, benzyltriphenylphosphonium bromide, methoxymethyltriphenylphosphonium bromide, ethyltriphenylphosphonium acetate, ethyltriphenylphosphonium iodide, tetraethylphosphonium hydroxide, tetrabutylphosphonium hydroxide, tetraphenylphosphonium tetrakis(4-methylphenyl)borate, tetraphenylphosphonium tetraphenylborate, or tetrabutylphosphonium o,o-diethyl phosphorodithioate.

### <Internal Release Agent>

The polymerizable composition of the disclosure may contain at least one internal release agent.

The internal release agent used here can be, for example, acidic phosphate.

Specific examples of the acidic phosphate include a compound represented by the following Formula (P1).

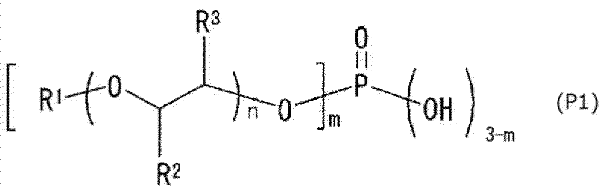

In Formula (P1), m represents 1 or 2, n represents an integer of from 0 to 18, R₁ represents an alkyl group having from 1 to 20 carbon atoms, and each of R₂ and R₃ independently represents a hydrogen atom, a methyl group, or an ethyl group. The number of carbon atoms in brackets marked with the index "m" is preferably from 4 to 20.

Examples of R₁ in the Formula (P1) include:
an organic residue derived from a linear aliphatic compound such as methane, ethane, propane, butane, pentane, hexane, heptane, octane, nonane, decane, undecane, dodecane, tetradecane, or hexadecane;
an organic residue derived from a branched aliphatic compound such as 2-methylpropane, 2-methylbutane, 2-methylpentane, 3-methylpentane, 3-ethylpentane, 2-methylhexane, 3-methylhexane, 3-ethylhexane, 2-methylheptane, 3-methylheptane, 4-methylheptane, 3-ethylheptane, 4-ethylheptane, 4-propylheptane, 2-methyloctane, 3-methyloctane, 4-methyloctane, 3-ethyloctane, 4-ethyloctane, or 4-propyloctane; and
an organic residue derived from an alicyclic compound such as cyclopentane, cyclohexane, 1,2-dimethylcyclohexane, 1,3-dimethylcyclohexane, or 1,4-dimethylcyclohexane.

Examples of a commercially available product of the acidic phosphate include ZELECUN manufactured by Stepan Company, JP series manufactured by Johoku Chemical Co., Ltd., PHOSPHANOL series manufactured by TOHO Chemical Industry Co., Ltd., and AP, DP series manufactured by Daihachi Chemical Industry Co., Ltd.

ZELECUN or JP-506H is preferred and JP-506H is particularly preferred from the viewpoints of solubility in the polymerizable composition and transparency of the resin.

In a case in which the polymerizable composition of the disclosure contains acidic phosphate serving as an internal release agent, the content of the acidic phosphate serving as an internal release agent is preferably from 0.001% by mass to 10% by mass, more preferably from 0.001% by mass to 5% by mass, still more preferably from 0.005% by mass to 3% by mass, still more preferably from 0.01% by mass to 2% by mass based on the entire amount of the polymerizable composition.

### <Polymerization Catalyst>

The polymerizable composition of the disclosure may contain at least one polymerization catalyst.

The polymerization catalyst is not particularly limited, and may be a non-metallic catalyst from the viewpoint of decrease of environment load.

Examples of the non-metallic catalyst include an amine compound (particularly preferably imidazole compound), a phosphonium salt compound, and an acid compound. Such a polymerization catalyst can be one in which the polymerization catalyst itself is a plant-derived compound.

The content of the polymerization catalyst in the polymerizable composition of the disclosure is preferably from 0.001% by mass to 10% by mass, more preferably from 0.001% by mass to 5% by mass, still more preferably from 0.005% by mass to 3% by mass, still more preferably from 0.01% by mass to 2% by mass based on the entire amount of the polymerizable composition.

### <Ultraviolet Absorber>

The polymerizable composition of the disclosure may contain at least one ultraviolet absorber.

Examples of the ultraviolet absorber include:
a benzophenone-based ultraviolet absorber such as 2,2'-dihydroxy-4-methoxybenzophenone, 2-hydroxy-4-acryloyloxybenzophenone, 2-hydroxy-4-acryloyloxy-5-tert-butylbenzophenone, or 2-hydroxy-4-acryloyloxy-2',4'-dichlorobenzophenone;
a triazine-based ultraviolet absorber such as 2-[4-[(2-hydroxy-3-dodecyloxypropyl)oxy]-2-hydroxyphenyl]-4,6-bis(2,4-dimethylphenyl)-1,3,5-triazine, 2-[4-(2-hydroxy-3-tridecyloxypropyl)oxy]-2-hydroxyphenyl]-4,6-bis(2,4dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, or 2-(2-hydroxy-4-[1-octyloxycarbonylethoxy]phenyl)-4,6-bis(4-phenylphenyl)-1,3,5-triazine; and
a benzotriazole-based ultraviolet absorber such as 2-(2H-benzotriazol-2-yl)-4-methylphenol, 2-(2H-benzotriazol-2-yl)-4-tert-octylphenol, 2-(2H-benzotriazol-2-yl)-4,6-bis(1-methyl-1-phenylethyl)phenol, 2-(2H-benzotriazol-2-yl)-4,6-di-tert-pentylphenol, 2-(5-chloro-2H-benzotriazol-2-yl)-4-methyl-6-tert-butylphenol, 2-(5-chloro-2H-benzotriazol-2-yl)-2,4-tert-butylphenol, 2,2'-methylenebis[6-(2H-benzotriazol-2-yl)-4-(1,1,3,3-tetramethylbutyl)phenol], or 2-(2H-benzotriazol-2-yl)-4-methyl-6-(3,4,5,6-tetrahydrophthalimidylmethyl)phenol.

The content of the ultraviolet absorber in the polymerizable composition of the disclosure is preferably from 0.001% by mass to 10% by mass, more preferably from 0.01% by mass to 5% by mass, still more preferably from 0.1% by mass to 5% by mass based on the entire amount of the polymerizable composition.

A polymerizable composition of one of preferred aspects of the disclosure is, for example, a polymerizable composition which contains an ultraviolet absorber, a polymerization catalyst, and acidic phosphate serving as an internal release agent.

A preferred range of the content of each component in this case is as described above, and, for example,
the content of the ultraviolet absorber is from 0.1% by mass to 5% by mass based on the entire amount of the polymerizable composition for an optical material,
the content of the polymerization catalyst is from 0.001% by mass to 5% by mass based on the entire amount of the polymerizable composition for an optical material, and
the content of the acidic phosphate serving as an internal release agent is from 0.001% by mass to 5% by mass based on the entire amount of the polymerizable composition for an optical material.

### <Other Component>

The polymerizable composition of the disclosure may contain any other component than the above components.

Examples of such other component include a light stabilizer, an antioxidant, a coloring inhibitor, a dye, a bluing agent, and a resin modifier.

The light stabilizer used here can be a hindered amine-based compound.

Examples of the hindered amine-based compound include:
LOWILITE 76 and LOWILITE 92 manufactured by Chemtura Corporation;
TINUVIN 123, TINUVIN 144, TINUVIN 292, TINUVIN 765, TINUVIN 770DF manufactured by BASF SE;
ADEKA STAB LA-52 and LA-72 manufactured by ADEKA CORPORATION; and JF-90 and JF-95 manufactured by Johoku Chemical Co., Ltd.

Examples of the bluing agent include one which has an absorption band in an orange to yellow wavelength region in a visible light region and which has a function of adjusting the hue of an optical material.

The bluing agent further specifically encompasses a substance exhibiting blue to violet.

### <Method of Producing Polymerizable Composition>

The polymerizable composition of the disclosure is obtained by mixing the above components (raw materials).

The order of mixing of the components (raw materials) is not particularly limited, and all the raw materials may be collectively loaded to and mixed in a container, or the raw materials may be loaded to a container in plural portions and then mixed.

Some of monomers (namely, polyisocyanate (a) and polythiol composition (b)) in the polymerizable composition of the disclosure may be polymerized to form a prepolymer in the process of mixing.

Hereinafter, a preferred mode of the polymerizable composition of the disclosure (hereinafter, "production method A") is described.

The production method A is a preferred production method in the case of production of a polymerizable composition of a mode in which an ultraviolet absorber, a polymerization catalyst, and an acidic phosphate are contained.

The production method A includes:
a step of adding the polyether-modified silicone compound (c) and the acidic phosphate to the aliphatic polyisocyanate (a1), to obtain a solution A1,
a step of dissolving the ultraviolet absorber and the polymerization catalyst in the aliphatic polyisocyanate (a1), to obtain a solution A2,
a step of mixing the solution A1, the solution A2, and the modified form (a2), to obtain a solution A3, and
a step of adding the polythiol composition (b) including a polythiol compound to the solution A3, to obtain the polymerizable composition of the disclosure.

According to the production method A, a polymerizable composition of a mode in which an ultraviolet absorber, a polymerization catalyst, and an acidic phosphate serving as an internal release agent are contained can be produced with suppression of generation of a gel-like insoluble substance.

An operation of mixing the solution A1, the solution A2, and the modified form (a2) to obtain the solution A3 is not needed to be performed at one time.

Examples of the operation of mixing the solution A1, the solution A2, and the modified form (a2) include:
an operation including first mixing the solution A2 and the modified form (a2) to obtain a solution A2X and then mixing the solution A2X and the solution A1; and
an operation including first mixing the solution A2 and the solution A1 to obtain a solution A12 and then mixing the solution A12 and the modified form (a2).

### [Optical Material]

The optical material of the disclosure includes a resin.

The resin in the optical material of the disclosure is a cured product of the polymerizable composition of the disclosure.

The resin in the optical material of the disclosure can be produced by curing the polymerizable composition of the disclosure, specifically, polymerizing and curing monomers in the polymerizable composition of the disclosure. One example of the method of producing the resin is, for example, cast polymerization described below.

The optical material of the disclosure may be composed of the resin in the disclosure, or may include the resin in the disclosure and any other element.

Examples of such any other element include any other member, and a coating layer provided on the resin of the disclosure.

Examples of the optical material of the disclosure include a lens (for example, spectacle lens, camera lens, or polarizing lens), and a light-emitting diode (LED).

Examples of the method of polymerizing monomers in the polymerizable composition of the disclosure (namely, the method of curing the polymerizable composition of the disclosure) include cast polymerization.

According to cast polymerization, a molded product of the resin in the optical material of the disclosure (namely, the cured product of the polymerizable composition of the disclosure) is obtained.

In cast polymerization, a polymerizable composition according to one example of the disclosure is first injected between paired molding molds retained by a gasket, a tape, or the like. A defoaming treatment, a filtration treatment, and/or the like may be, if necessary, performed here.

Next, the monomers in the composition, injected between the molding molds, can be polymerized, to cure the composition between the molding molds and thus provide a cured product. Next, the cured product is removed from the molding molds, to provide a cured product.

The monomers may be polymerized by heating the polymerizable composition of the disclosure. This heating can be performed with, for example, a heating apparatus provided with a mechanism for heating a heating object in an oven, in water, or the like.

Polymerization conditions (for example, polymerization temperature and polymerization time) for polymerizing the monomers in the polymerizable composition of the disclosure are set, as appropriate, in consideration of the compositional ratio of the composition, the types and amounts of use of the monomers in the composition, the type and the amount of use of the polymerization catalyst in the composition, the shape of the molds, and the like.

The polymerization temperature is, for example, from -50°C to 150°C, or from 10°C to 150°C.

The polymerization time is, for example, from 1 hour to 200 hours, or from 1 hour to 80 hours.

The resin in the optical material of the disclosure may be obtained by applying a treatment such as annealing after polymerization of the monomers.

The temperature in the annealing is, for example, from 50°C to 150°C, from 90°C to 140°C, or from 100°C to 130°C.

### (Preferred Performance of Resin)

The glass transition temperature (Tg) of the resin in the optical material of the disclosure is preferably 60°C or more, more preferably 70°C or more, still more preferably 80°C or more.

The Tg of the resin may be 130°C or less, may be 120°C or less, or may be 110°C or less.

The refractive index (ne) of the resin in the optical material of the disclosure is preferably 1.500 or more, more preferably 1.540 or more, still more preferably 1.590 or more.

The upper limit of the refractive index (ne) is not particularly limited, and the upper limit is, for example, 1.750.

The Abbe's number of the resin in the optical material of the disclosure is preferably 28 or more, more preferably 30 or more.

The upper limit of Abbe's number is not particularly limited, and the upper limit is, for example, 50, preferably 45.

The specific gravity d of the resin in the optical material of the disclosure is preferably 1.10 or more, more preferably 1.20 or more.

The upper limit of the specific gravity d is not particularly limited, and the upper limit is, for example, 1.50, preferably 1.40.

The yellow index (YI) of the resin in the optical material of the disclosure is preferably 2.10 or less, more preferably 2.00 or less, still more preferably 1.90 or less, still more preferably 1.80 or less.

The lower limit of the YI is not particularly limited, and the lower limit is, for example, 1.30, preferably 1.50.

The haze of the resin in the optical material of the disclosure is preferably 0.30 or less, more preferably 0.25 or less, still more preferably 0.20 or less.

The lower limit of the haze is not particularly limited, and the lower limit is, for example, 0.05, preferably 0.10.

### (Degree of Biomass of Resin)

The degree of biomass of the resin in the optical material of the disclosure is preferably 25% or more, more preferably 30% or more, still more preferably 50% or more from the viewpoint of utilization of non-fossil resources.

In the disclosure, the degree of biomass is determined by a calculation method on a carbon basis, and is a value calculated based on the following Formula. Degree of biomass (%) = {(Number of plant-derived carbon atoms)/(Number of plant-derived carbon atoms + Number of petroleum-derived carbon atoms)} × 100

Here, the "plant-derived carbon" means ¹⁴C and the "petroleum-derived carbon" means carbon atom (mostly ¹²C) other than ¹⁴C, and the "number of plant-derived carbon atoms + number of petroleum-derived carbon atoms" means the total number of carbon atoms in a measurement object.

In the disclosure, the degree of biomass (%) of the resin is calculated by burning the resin as a measurement sample to generate CO₂ and measuring the content of ¹⁴C and the content of any carbon atom other than ¹⁴C in such CO₂ produced, by an accelerator mass spectrometer (AMS), according to the test method of D6866-21 (Standard Test Method for Determining the Biobased Content of Natural Range Materials Using Radiocarbon and Isotope Ratio Mass Spectrometry Analysis) in ASTM (American Society for Testing and Materials).

### [Lens]

The lens of the disclosure is one example of the optical material of the disclosure, and includes the resin of the disclosure.

The lens of the disclosure can be produced by, for example, the above-mentioned cast polymerization.

The lens of the disclosure may be composed of the resin in the disclosure, or may include the resin in the disclosure and any other element.

Examples of such any other element include any other member, and a coating layer provided on the resin of the disclosure.

Examples of the lens of the disclosure include a spectacle lens, a camera lens, and a polarizing lens.

Hereinafter, a spectacle lens is described as one example of the lens of the disclosure.

The spectacle lens includes the resin in the disclosure, molded into a desired lens shape.

The spectacle lens preferably further includes a coating layer provided on one surface or each of both surfaces of the resin.

Specific examples of the coating layer include a primer layer, a hard coat layer, an antireflection layer, an anti-fogging coat layer, an antipollution layer, and a water-repellent layer. Such a coating layer can be each used singly or a plurality of such coating layers can be multi-layered and then used.

In a case in which the coating layer is applied on each of both surfaces of the cured product, the same type of the coating layer may be applied on such each surface or different types of such coating layers may be applied respectively on both the surfaces.

The component in the coating layer can be selected, as appropriate, depending on the object.

Examples of the component in the coating layer include a resin (for example, urethane resin, epoxy resin, polyester resin, melamine resin, or polyvinyl acetal resin), an infrared absorber, a light stabilizer, an antioxidant, a photochromic compound, a dye, a pigment, and an antistatic agent.

The spectacle lens and the coating layer can be found, as appropriate, in the description of any known Document, for example, Japanese Patent Application Laid-Open (JP-A) No. 2002-194083 or WO 2017/047745.

### EXAMPLES

Hereinafter, the Examples of the disclosure are shown, but the disclosure is not limited to the following Examples. Herein, "part(s)" is expressed on a mass basis, unless particularly noted.

### [Example 1]

### <Preparation of Polymerizable Composition>

A solution A1 was prepared by mixing and dissolving, at 20°C,
12.00 parts by mass of 1,5-pentamethylene diisocyanate (hereinafter, also referred to as "PDI") ("STABIO PDI" manufactured by Mitsui Chemicals, Inc.; degree of biomass 70%) as the aliphatic polyisocyanate (a1),
0.10 parts by mass of POLYFLOW KL-100 (manufactured by Kyoeisha Chemical Co., Ltd.) (hereinafter, also referred to as "KL-100") as the polyether-modified silicone compound (c), and
0.20 parts by mass of JP-506H (acidic phosphate manufactured by Johoku Chemical Co., Ltd.) as the internal release agent.

Herein, KL-100 is the polyether-modified silicone compound (c) represented by Formula (1), and more specifically includes the compound represented by Formula (1A) and the compound represented by Formula (1B).

Next, a solution A2 was obtained by mixing and dissolving, at 20°C,
20.45 parts by mass of PDI ("STABIO PDI" manufactured by Mitsui Chemicals, Inc.; degree of biomass 70%) as the aliphatic polyisocyanate (a1),
0.60 parts by mass of 2-(2H-benzotriazol-2-yl)-4-tert-octylphenol as the ultraviolet absorber,
0.60 parts by mass of 2-(2H-benzotriazol-2-yl)-4-methyl-6-(3,4,5,6-tetrahydrophthalimidylmethyl)phenol as the ultraviolet absorber, and
0.03 parts by mass of dimethyltin dichloride (hereinafter, also referred to as "DMC") as the polymerization catalyst.

A solution A2X was obtained by adding, to the solution A2 obtained, 28.15 parts by mass of a mononuclear isocyanurate of 1,5-pentamethylene diisocyanate (hereinafter, also referred to as "PDI nurate") ("STABIO D-370N" manufactured by Mitsui Chemicals, Inc.); degree of biomass 70%), as the modified form (a2) of an aliphatic polyisocyanate, and mixing and dissolving them at 20°C.

The solution A1 (3.08 parts by mass) prepared previously was added to the solution A2X obtained, and mixed and dissolved at 20°C, to provide a solution A3 containing the polyisocyanate (a) and the polyether-modified silicone compound (c).

The solution A3 obtained was degassed under a reduced pressure of 600 Pa until foaming disappeared.

As the polythiol composition (b),
14.65 parts by mass of pentaerythritol tetrakis(3-mercaptopropionate) (namely, the above polythiol component S1), and
33.05 parts by mass of a polythiol composition including 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane (namely, the polythiol component S2) as a main component,
were added to the solution A3 degassed, and these were mixed and dissolved at 20°C.

From the foregoing, a polymerizable composition containing the polyisocyanate (a), the polythiol composition (b), and the polyether-modified silicone compound (c) was obtained.

### <Production of Resin Molded Product>

The polymerizable composition obtained above was sufficiently degassed under a reduced pressure of 600 Pa until foaming disappeared.

The polymerizable composition after degassing was filtered by a 1-µm filter, and injected between paired glass molds fixed by a tape. Next, the paired glass molds with the polymerizable composition injected was loaded to an oven, and the temperature in the oven was gradually raised from 20°C to 120°C over 20 hours. According to the above process, the monomers (namely, polyisocyanate (a) and polythiol composition (b)) in the polymerizable composition after degassing were polymerized, to form a resin molded product (namely, resin molded product being a cured product of the polymerizable composition) between the paired glass molds.

Subsequently, the interior of the oven was cooled, the paired glass molds were removed from the oven after such cooling, and then the resin molded product was removed from the paired glass molds and thus the resin molded product was obtained.

The resin molded product obtained was annealed at 120°C for 1 hour, to provide a lens including the resin.

### <Evaluation>

The resin molded product (namely, lens) after annealing was evaluated as follows.

The results are shown in Table 1.

### Mold Releasability

The mold releasability in removal of the resin molded product from the paired glass molds in production of the resin molded product was evaluated by the following evaluation criteria.

The rank of the most excellent mold releasability is A in the following evaluation criteria.

### -Evaluation criteria of mold releasability-

A: Resin molded product was naturally released from paired glass molds by cooling oven interior to room temperature.
B: Resin molded product was releasable from paired glass molds by wedge application to edge portion of resin molded product.
C: Glass molds were broken, or glass was peeled and adhered to resin, during mold release, or resin was non-releasable from glass molds.

### Heat Resistance

A test piece having a length of 10 mm, a width of 10 mm, and a thickness of 2.5 mm was obtained by the same operation as the operation in the <Production of Resin Molded Product> except that the shape and the size of the paired glass molds were selected, as appropriate.

The glass transition temperature Tg of the sample was measured with a thermomechanical analyzer TMA-60 manufactured by Shimadzu Corporation, by a TMA penetration method (load 50 g, tip of pin 0.5 mmφ, rate of temperature rise 10°C/min), and adopted as an index of heat resistance.

As the glass transition temperature Tg is higher, heat resistance is more excellent.

### Specific gravity

The specific gravity of the resin molded product was measured at 20°C by the Archimedes method.

### Optical Physical Properties (Refractive Index (nₑ) and Abbe's Number (νₑ))

A test piece having a length of 10 mm, a width of 10 mm, and a thickness of 2.5 mm was obtained by the same operation as the operation in the <Production of Resin Molded Product> except that the shape and the size of the paired glass molds were selected, as appropriate. The test piece obtained was subjected to measurement of the refractive index at each of the wavelengths, a wavelength of 546.1 nm (mercury e line), a wavelength of 480.0 nm (Cd F' line), and a wavelength of 643.9 nm (Cd C' line), with a Pulfrich refractometer KPR-30 manufactured by Shimadzu Corporation, and the refractive index (nₑ) and the Abbe's number (νₑ) were each determined based on these results.

### YI (Yellow Index; Degree of Yellow), a*, and b*

A disc-shaped test piece having a thickness of 2.5 mm and a diameter of 75 mm was obtained by the same operation as the operation in the <Production of Resin Molded Product> except that the shape and the size of the paired glass molds were selected, as appropriate. The YI (yellow index; degree of yellow), a*, and b* of the test piece obtained were determined with a spectrophotometric colorimeter CM-5 manufactured by Konica Minolta, Inc.

As the numerical value of YI is smaller, the hue of the lens is more excellent.

### Haze

A disc-shaped test piece having a thickness of 2.5 mm and a diameter of 75 mm was obtained by the same operation as the operation in the <Production of Resin Molded Product> except that the shape and the size of the paired glass molds were selected, as appropriate. The test piece obtained was adopted and the haze value of the resin was measured with a HAZE METER (Model No.: NDH 2000) manufactured by Nippon Denshoku Industries Co., Ltd.

As the numerical value of the haze is smaller, transparency of the lens is more excellent.

### Striae

A semi-finished lens having a thickness of 10 mm was produced by the same operation as the operation in the <Production of Resin Molded Product> except that paired glass molds having 6 base curves were used.

The semi-finished lens obtained was adopted, and the presence of striae was visually confirmed with a high-pressure mercury lamp (OPTICAL MODULEX manufactured by Ushio Inc.). The striae were evaluated based on the results confirmed, according to the following evaluation criteria.

The rank of the striae most suppressed is A in the following evaluation criteria.

### -Evaluation Criteria of Striae-

A: Striae were not observed even by use of high-pressure mercury lamp.
B: Striae were observed by use of high-pressure mercury lamp, and striae were observed only within 10 mm range from edge portion toward center of lens.
C: Striae were observed by use of high-pressure mercury lamp, and striae were observed within 30 mm range from edge portion toward center of lens.
D: Striae were visually easily confirmable without high-pressure mercury lamp.

### [Comparative Example 1]

The same operation as in Example 1 was performed except that the polyether-modified silicone compound (c) was not used in preparation of the polymerizable composition.

The results are shown in Table 1.

### [Comparative Example 2]

The same operation as in Example 1 was performed except that the polyether-modified silicone compound (c) was changed to the same mass of a non-modified silicone compound (comparative compound) in preparation of the polymerizable composition.

The non-modified silicone compound used here was "KF-96" (dimethylsilicone oil (non-modified dimethylpolysiloxane)) manufactured by Shin-Etsu Silicone.

The results are shown in Table 1.

**Table 1**

| | | | | | Example 1 | Comparative Example 1 | Comparative Example 2 |
|---|---|---|---|---|---|---|---|
| Polymerizable composition | Polyisocyanate (a) | Aliphatic polyisocyanate (a1) | PDI | amount (parts by mass) | 24.15 | 24.15 | 24.15 |
| | | Modified form (a2) | PDI nurate | amount (parts by mass) | 28.15 | 28.15 | 28.15 |
| | | Proportion (% by mass) of modified form (a2) | | | 54 | 54 | 54 |
| | Polythiol composition (b) | | Polythiol component S1 | amount (parts by mass) | 14.65 | 14.65 | 14.65 |
| | | | Polythiol composition including polythiol component S2 as main component | amount (parts by mass) | 33.05 | 33.05 | 33.05 |
| | Polyether-modified silicone compound (C) | | KL-100 | amount (parts by mass) | 0.025 | 0 | 0 |
| | Non-modified silicone compound (comparative compound) | | KF-96 | amount (parts by mass) | 0 | 0 | 0.025 |
| | Polymerization catalyst | | Dimethyltin dichloride | amount (parts by mass) | 0.03 | 0.03 | 0.03 |
| | Ultraviolet absorber | | TINUVIN 329 | amount (parts by mass) | 0.60 | 0.60 | 0.60 |
| | Ultraviolet absorber | | SEESORB 706 | amount (parts by mass) | 0.60 | 0.60 | 0.60 |
| | Internal release agent | | JP-506H | amount (parts by mass) | 0.05 | 0.05 | 0.05 |
| Evaluation results | | Mold releasability | | | A | A | A |
| | | Heat resistance | | Tg [°C] | 86.8 | 86.8 | 86.2 |
| | | Optical physical properties | | Refractive index (ne) | 1.603 | 1.603 | 1.603 |
| | | | | Abbe's number (ve) | 38.5 | 38.6 | 38.6 |
| | | Spectrophotometric colorimeter (2 mm) | | YI | 1.78 | 2.08 | 1.93 |
| | | Haze value | | Haze | 0.17 | 0.28 | 0.23 |
| | | Striae observation | | | A | B | B |

As shown in Table 1, striae in the resin of Example 1, produced with the polymerizable composition for an optical material, including the polyisocyanate (a) including the aliphatic polyisocyanate (a1) and modified form (a2), the polythiol composition (b), and the polyether-modified silicone compound (c), were suppressed as compared with the resin of Comparative Example 1, produced with the polymerizable composition for an optical material, not including the polyether-modified silicone compound (c), and the resin of Comparative Example 2, produced with the polymerizable composition for an optical material, including a non-modified silicone compound (comparative compound) instead of the polyether-modified silicone compound (c).

The degree of biomass of the resin of Example 1 was measured by the above method.

As a result, the degree of biomass of the resin of Example 1 was 45%.

The disclosure of Japanese Patent Application No. 2022-158847 filed on September 30, 2022, is herein incorporated by reference in its entirety.

All documents, patent applications, and technical standards described herein are herein incorporated by reference, as if each individual document, patent application, and technical standard were specifically and individually indicated to be incorporated by reference.

## Claims

1. A polymerizable composition for an optical material, the composition comprising:
a polyisocyanate (a) comprising an aliphatic polyisocyanate (a1) and a modified form (a2) of an aliphatic polyisocyanate;
a polythiol composition (b) comprising a polythiol compound; and
a polyether-modified silicone compound (c) represented by the following Formula (1): 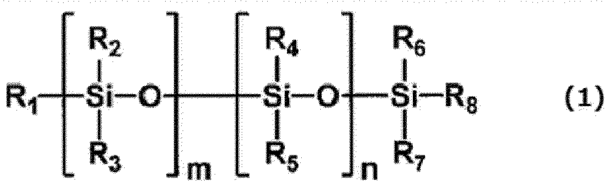 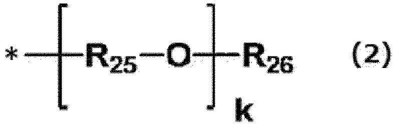
wherein, in Formula (1), each of R₁ to R₈ independently represents a polyether group represented by Formula (2), an alkyl group having from 1 to 20 carbon atoms, an alkoxy group having from 1 to 20 carbon atoms, a hydroxy group, or a polysiloxy group, provided that at least one of R₁ to R₈ is a polyether group represented by Formula (2),
in Formula (1), each of m and n independently represents an integer of 0 or more,
in Formula (1), in a case in which a plurality of R₂'s, R₃'s, R₄'s, or R₅'s are present, the plurality of R₂'s, R₃'s, R₄'s, or R₅'s may be the same as or different from each other,
in Formula (2), R₂₅ represents an alkylene group having from 1 to 20 carbon atoms, R₂₆ represents a hydrogen atom, an alkyl group having from 1 to 20 carbon atoms, an alkenyl group having from 2 to 20 carbon atoms, or an alkynyl group having from 2 to 20 carbon atoms, k represents an integer of 1 or more, and * represents a binding position, and
in Formula (2), in a case in which a plurality of R₂₅'s are present, the plurality of R₂₅'s may be the same as or different from each other.

2. The polymerizable composition for an optical material according to claim 1, wherein the modified form (a2) comprises a mononuclear isocyanurate of an aliphatic polyisocyanate.

3. The polymerizable composition for an optical material according to claim 1, wherein at least one of the aliphatic polyisocyanate (a1) or the aliphatic polyisocyanate in the modified form (a2) comprises at least one selected from the group consisting of pentamethylene diisocyanate, hexamethylene diisocyanate, heptamethylene diisocyanate, lysine diisocyanate, lysine triisocyanate, dimer acid diisocyanate, octamethylene diisocyanate, and decamethylene diisocyanate.

4. The polymerizable composition for an optical material according to claim 1, wherein at least one of the aliphatic polyisocyanate (a1) or the aliphatic polyisocyanate in the modified form (a2) comprises an aliphatic polyisocyanate obtained from a plant-derived raw material.

5. The polymerizable composition for an optical material according to claim 1, wherein the polythiol compound is at least one selected from the group consisting of:
4-mercaptomethyl-1,8-dimercapto-3,6-dithiaoctane,
4,8-dimercaptomethyl-1,11-dimercapto-3,6,9-trithiaundecane,
4,7-dimercaptomethyl-1,11-dimercapto-3,6,9-trithiaundecane,
5,7-dimercaptomethyl-1,11-dimercapto-3,6,9-trithiaundecane,
pentaerythritol tetrakis(2-mercaptoacetate),
pentaerythritol tetrakis(3-mercaptopropionate),
2,5-dimercaptomethyl-1,4-dithiane,
bis(2-mercaptoethyl)sulfide, and
diethylene glycol bis(3-mercaptopropionate).

6. The polymerizable composition for an optical material according to claim 1, wherein the polythiol compound comprises a polythiol compound obtained from a plant-derived raw material.

7. The polymerizable composition for an optical material according to claim 1, wherein a proportion of the modified form (a2) in the polyisocyanate (a) is 60% by mass or less.

8. The polymerizable composition for an optical material according to claim 1, wherein a total content of the polyisocyanate (a) and the polythiol composition (b) is 80% by mass or more based on an entire amount of the polymerizable composition for an optical material.

9. The polymerizable composition for an optical material according to claim 1, wherein a content of the polyether-modified silicone compound (c) is from 0.001% by mass to 5% by mass based on an entire amount of the polymerizable composition for an optical material.

10. The polymerizable composition for an optical material according to claim 1, further comprising an ultraviolet absorber, a polymerization catalyst, and an acidic phosphate serving as an internal release agent.

11. The polymerizable composition for an optical material according to claim 10, wherein:
a content of the ultraviolet absorber is from 0.1% by mass to 5% by mass based on an entire amount of the polymerizable composition for an optical material,
a content of the polymerization catalyst is from 0.001% by mass to 5% by mass based on the entire amount of the polymerizable composition for an optical material, and
a content of the acidic phosphate serving as an internal release agent is from 0.001% by mass to 5% by mass based on the entire amount of the polymerizable composition for an optical material.

12. An optical material, comprising a resin that is a cured product of the polymerizable composition for an optical material according to any one of claims 1 to 11.

13. The optical material according to claim 12, wherein the resin has a degree of biomass of 25% or more.

14. A method of producing the polymerizable composition for an optical material according to claim 10 or 11, the method comprising:
a step of adding the polyether-modified silicone compound (c) and the acidic phosphate to the aliphatic polyisocyanate (a1), to obtain a solution A1;
a step of dissolving the ultraviolet absorber and the polymerization catalyst in the aliphatic polyisocyanate (a1), to obtain a solution A2;
a step of mixing the solution A1, the solution A2, and the modified form (a2), to obtain a solution A3; and
a step of adding the polythiol composition (b) to the solution A3, to obtain the polymerizable composition for an optical material.
